# NEW EUROPEAN PATENT SPECIFICATION

(11) **EP 1 759 591 B2**
(45) Date of publication and mention of the opposition decision: **23.07.2014**
(45) Mention of the grant of the patent: 24.09.2008
(21) Application number: 05107975.4
(22) Date of filing: 31.08.2005
(51) Int. Cl.: A23G 3/00, A23G 1/00, A23L 1/307

(54) **Low-fat confectionery product**
Konfektprodukte mit niedrigem Fettgehalt
Produit de confiserie allégé en matières grasses

(43) Date of publication of application: 07.03.2007
(73) Proprietor: Nestec S.A., 1800 Vevey (CH)
(72) Inventor: Rey, Brigitte, 1609, Besencens (FR) (CH); Rossi-Vauthey, Patricia, 1800, Vevey (CH); Rousset, Philippe, 1066, Epalinges (CH); Sandoz, Laurence, 1040, Echallens (CH); Schafer, Olivier, 1066, Epalinges (CH); Schmitt, Christophe Joseph Etienne, 1092, Belmont S/Lausanne (CH)
(74) Representative: Rupp, Christian

(56) References cited:
- EP-A- 0 522 704
- US-A- 5 011 704
- US-A- 5 776 536

## Description

### Field of the invention

The present invention relates to confectionery products with low fat or very low fat contents.

### Background of the invention

Confectionery products such as chocolates, pralines or the like are fat-based products that are well appreciated by consumers. The fat content of a chocolate may vary from about 25% to about 40% by weight depending on whether it is plain, milk or white chocolate but is usually from about 30% to 34% by weight based on the total weight of the chocolate. Therefore, as a growing proportion of consumers try to limit their intake of fat and/or calories, many attempts have been made by the Confectionery Industry to lower the fat and calorie contents of said confectionery products.

Examples of such attempts include processing tricks, replacement of sugar by sugar replacers such as polyols and/or polydextroses, use of special fats, or use of special emulsifiers.

Other approaches have been made using emulsions.
For example, Lotte patent EP 440 203 discloses an emulsified composition characterized in that it has a structure in which a hydrophilic anhydrous solid material and a water-containing food material independently coexist in oil in a state of fine particles respectively. The hydrophilic anhydrous solid material (25-70%) is one of solid sugars, milk products and starches, the water-containing food material (2-40%) is for example a juice or a milk product, the oil (25-65%) can be cocoa butter, and the emulsified composition can be a center cream for chocolates and the like. The problem solved by this invention is to provide an emulsified composition and a production method thereof, which is a food article containing water such as fruit juice, vegetable juice, yogurt, raw eggs, liquor and the like and the hydrophilic anhydrous solid material, having a structure in which the hydrophilic anhydrous solid material and the water-containing food article coexist in oil in a stable state, and having the very delicious and smooth mouth-feel maintaining the original taste and flavour of the water-containing food article.

US 5 776 536 discloses a reduced fat chocolate comprising defatted chocolate and lipid vesicles (50-90% wt), the lipid vesicles being paucilamellar preferably having 2-10 bilayers surrounding a central cavity, and comprising a lipid phase (20-40% wt) including a surfactant, and an aqueous phase (60-80% wt) comprising a sweetener. The problem solved by this invention is to have a simpler method of making low fat chocolate but retaining the pleasure and taste of chocolate.

WO 2004/028 281 discloses a product taken from the group consisting of a foam, an emulsion, a foamed emulsion, a dispersed emulsion and a foamed emulsion, wherein the interface water-air, water-oil or water-solid comprises a complex formed instantaneously at said interface by the mixture of at least a protein (or peptide) and at least a polysaccharide oppositely charged or the mixture of two proteins oppositely charged, said product being in a pH range within which the electrostatic interaction between both compounds oppositely charged occurs and wherein the total amount of protein and polysaccharide is comprised between 0.01 and 5% in weight. The product can be used in chocolate, representing from 10-100% of said chocolate. The patent application further discloses stabilised co-emulsions and stabilized co-emulsions and co-suspensions.

EP 986 959 discloses a coating for frozen confectionery which is a water-in-oil emulsion comprising 60-80% of a water phase, 20-35% of a fat phase and 0.5-8% of an emulsifier, the water phase comprising 10-70% carbohydrates. The problem solved by this invention is to have a coating based on a water-in-oil emulsion which has texture and flavour properties superior to that of conventional fat-based coatings and significantly better keeping properties, softness, e.g. less brittleness and better adhesion to frozen confectionery.

Still other approaches have been made using dispersions.
One example is EP 522 704 disclosing a chocolate food product which has been modified in its properties by the inclusion of an aqueous sugar solution of micro particularized cocoa, wherein 100% of the hydrated cocoa particles have a particle size of 0.1 to 20 microns, with an average mean particle size of 2 to 7 (commercial cocoa powders have an average particle size of typically 75 microns). The hydrated micro particles of cocoa are dispersed uniformly throughout an aqueous sugar paste which contains 10-30% cocoa as described above, 15-75% sugar and 20-55% water, and has a water activity (Aw) of 0.80 to 0.90. The problem solved by this invention is to have a new form of micro particularized cocoa paste having a low water content, low fat and improved flavour.

However, none of the attempts described above provide a low-fat confectionery product having both a rich cocoa flavour mimicking the flavour of regular chocolates, and a mouthfeel mimicking the texture of regular chocolates, in particular leading to similar melting, firmness and snapping characteristics.

### Summary of the Invention

The present invention covers a low-fat confectionery product comprising 0-20% fat phase, 60-90% aqueous phase, and at least a structuring agent one embodiment of which is a water-in-oil emulsion comprising cocoa particles and a second embodiment of which is a co-suspension comprising electrically charged cocoa particles, wherein the cocoa particles of the co-suspension are coated with the structuring agent. The present invention further relates to processes of manufacture of said low-fat confectionery products.

### Detailed Description of the Invention

In the present specification and examples, all percentages are expressed by weight unless otherwise mentioned.

According to the present invention, the low-fat confectionery product may be a chocolate, a chocolate-like (e.g, comprising cocoa butter replacers, or cocoa-butter equivalents), a coating chocolate, a coating chocolate for ice-creams, a praline, a chocolate filling, a fudge, a chocolate cream, a refrigerated chocolate cream, an extruded chocolate product, or the like. The low-fat confectionery product may be in form of an aerated product, a bar, or a filling, among others. It may also be inclusions, chocolate layers, chocolate nuggets, chocolate pieces, chocolate drops, or shaped chocolates, such as in the form of letters of the alphabet and numbers, dinosaurs, cars, and the like. The low-fat confectionery product may further contain crispy inclusions e.g. cereals, like expanded or toasted rice or dried fruit pieces which are preferably coated in moisture barriers to delay the absorption of moisture from the low-fat confectionery product

In the present specification, the term "fat phase" has to be understood as including any solid and/or liquid ingredient miscible with oil or fat or that has the capacity to dissolve in oil or fat at ambient temperature, and "aqueous phase" as any solid and/or liquid ingredient miscible with water or that has the capacity to dissolve in water at ambient temperature. For example, the fat phase may comprise lipophilic sucrose esters, and the aqueous phase may comprise sugars. Insoluble particles, such as cocoa powder, calcium carbonate, titan dioxide or particulate starch do not belong neither to the fat phase nor to the aqueous phase.

In the present specification, the term "structuring agent" has to be understood as a component having the capacity to bind and /or structure water. Structuring agents of the present invention are limited to polysaccharides and/or proteins.

The structuring agent is important as it allows gelation of water droplets, or it can bind particles dispersed in water between themselves, which is an essential characteristic of the present invention. The structuring agent can be taken form the group consisting of carrageenans, pectins, gellan, gelatines, guar, acacia gum, sodium alginate, xanthan gum or globular proteins such as those contained in a whey protein isolate, an egg white protein isolate, a soy protein isolate or any other globular protein isolate from an animal or vegetal source. It can also be a combination of some of the afore-mentioned structuring agents.

The low-fat confectionery product can be a co-suspension or a water-in oil emulsion, for example. Preferably, it comprises a preservative, which is an ingredient that limits or prevents microorganism growth, in particular bacterial growth, such as sorbic acid, potassium sorbate, calcium sorbate, benzoic acid, sodium benzoate, calcium benzoate, potassium benzoate, ethyl-p-hydroxybenzoate, sodium ethyl-p-hydroxybenzoate, propyl-p-hydroxybenzoate, sodium propyl-p-hydroxybenzoate, methyl-p-hydroxybenzoate, sodium methyl-p-hydroxybenzoate. Furthermore, the system can be acidified with for example : lactic acid, citric acid, ascorbic acid or any food-grade acid.

The low-fat confectionery product may comprise other ingredients, such as flavouring agents, colorants, or milk ingredients. The flavouring agents can add coffee flavours, or vanilla, raspberry, orange, mint, citrus, strawberry, apricot, lavender flavours, any mixture thereof, and any other fruit, nutty or flower flavouring agent, among others. The milk ingredients can be liquid milk or milk powder, either full fat, partially defatted or defatted, and delactosylated or not.

The low-fat confectionery product may comprise sugars. These sugars include sucrose, fructose, sugar replacers such as polyols (e.g., maltitol, lactitol, isomalt, erythritol, sorbitol, mannitol, xylitol) or bulking agents like polydextrose or other sweeteners like tagatose or high intensity sweeteners like saccharin, aspartame, acesulfame-K, cyclamate, neohesperidin, thaumathin, sucralose, alitame, neotame or any combination thereof.

The low-fat confectionery product may also comprise an emulsifier, although it is not required. The emulsifier stabilizes the droplet interface or lowers the surface energy of particles. Advantageously, when present, the emulsifier may comprise sugar esters, polyglycerol fatty acid esters, polyglycerol polyricinoleate (PGPR), polysorbates (polyoxyethylene sorbitan esters), monoglycerides and combinations thereof. A preferred emulsifier for embodiments of the present invention consisting of a water-in-oil emulsion is sugar esters or polyglycerol polyricinoleate (PGPR). Even most preferred is the use of a hydrophilic emulsifier and even most preferred is the use of sodium stearoyl lactylate (SSL) in combination with any other emulsifier cited above, for example the combination of SSL and sugar esters or PGPR, that is believed to improve the melting characteristics of the low-fat confectionery product of the invention.

When present, the fat can be cocoa butter, cocoa butter substitute, cocoa butter replacers, cocoa butter improvers or cocoa butter equivalents, among others.

Cocoa butter substitute is a lauric fat obtained from the kernel of the fruit of palm trees obtained by fractionation and/or hydrogenation of palm kernel oil. It comprises about 55% lauric acid, 20% myristic acid and 7% oleic acid, cocoa butter substitutes can not be mixed with cocoa butter.
The cocoa butter equivalents are vegetable fats with similar chemical and physical characteristics to cocoa butter, which are obtained by blending different fractions of other fats or by intersterification, and can be used interchangeably with cocoa butter in any recipe.
The cocoa butter replacers are formed by non lauric vegetable fats which may be mixed with cocoa butter but only in limited proportions: they have similar physical, but not chemical characteristics to cocoa butter. Cocoa butter replacers can be used in recipes partially based on cocoa mass or cocoa butter.
Cocoa butter improvers are harder cocoa butter equivalents which are not only equivalent in their compatibility but also improve the hardness of some of the softer qualities of cocoa butter.

In one embodiment of the invention, the low-fat confectionery product is a co-suspension comprising cocoa of particles in an aqueous phase whose structure is controlled by the electrostatic interactions between particles coated by structuring agents.
The particles can be cocoa powder, defatted cocoa powder, solids of cocoa liquor. In a preferred embodiment, the particles comprise 10% cocoa powder and 30% starch and/or skimmed milk powder.
These particles must be coated with polysaccharides or proteins of opposite charge, in order to improve the stability of the co-suspension and therefore avoid the separation of phases.
In this embodiment, the low-fat confectionery product can be a zero-fat confectionery product, comprising an aqueous phase and solids that do not dissolve or do not dissolve completely in the aqueous phase, such as cocoa powder and/or milk powder.

Indeed, the present embodiment covers low-fat confectionery products made by three different approaches.

In the first one, which does not comprise added fat, 2 dispersions are prepared: one with negatively charged particles in aqueous solution, the other one with positively charged particles in aqueous solutions and the two aqueous solutions are mixed together to form a structured mixture.

In the second and third one, there is some added fat. The second approach comprises the same steps as in the first approach, and fat (such as cocoa liquor) is added after the two aqueous dispersions are mixed. Fat droplets are not electrically charged.

The third approach comprises the steps of having negatively charged particles in a first aqueous dispersion and positively charged particles in a second aqueous dispersion, one of said dispersions comprising fat that has the same electric charges of said dispersions. The two dispersions are then mixed together. This last approach is not a co-emulsion, as only one of the aqueous dispersions comprises fat.

The invention also proposes a process to manufacture a low-fat confectionery product according to the present embodiment, comprising the steps of
a) preparation of a water dispersion with a structuring agent like a globular protein or gelatin on one hand, and a water dispersion with a structuring agent like a polysaccharide on the other hand ;
b) dissolution of sugars or other soluble material in water and flavoring agents, when present, in each dispersion;
c) mixing of each dispersion independently together with the particles;
d) adjustment of the pH of the dispersion to a value where both the polysaccharide and the protein chosen carried opposite charges using a edible base or an acid;
e) mixing of the two suspensions. If one of the dispersions comprises fat, mixing is achieved at a temperature comprised between 30 and 80°C, preferably between 40-60°C, most preferably at 50°C.

Preferably, the globular proteins added in step a) are chosen from vegetable or animal source, such as whey protein isolate, β-lactoglobulin, pea globulin, α-lactalbumin, egg white proteins.

Preferably, step a) is followed by the storage of the two dispersions for at least 5 hours at a temperature below 10°C, for example 7 to 10 hours at a temperature of 5°C or less. This is to allow proteins and polysaccharides to fully hydrate.

In step b), sugars are added to the solution. Preferably, the sugar concentration in each of the solutions is from 10 to 90% of the concentration of sugars in the other solution. The total amount of sugars added can vary widely, for example between 0 and 50% by weight of the fmal composition. Indeed, sugars can be absent from the composition.

In step d) the particles are added. They comprise milk powder, cocoa powder or any other insoluble or partially insoluble particles, and/or cocoa liquor, which is a mix of cocoa particles and cocoa fat.

Preferably, and when one of the solutions comprises fat, steps d) and e) are achieved at temperatures above ambient temperature, for example at 50°C for 30 minutes. However, the skilled person will adapt the process according to his knowledge, and will mix the solutions until the mixture is homogeneous.

The product as described above and obtained by this process preferably has a calorie content of between 100 and 300 kcal / 100 g of final product, a fat content of 0%, and a water content of 15-65%, whereas the pH range of the aqueous phase is comprised between 3.0 and 5.0.

In another embodiment, the low-fat confectionery product of the present invention is a water-in-oil emulsion, wherein the aqueous phase represents at least 60% of the fmal product and the fat phase at most 20%. The product therefore comprises a majority of water droplets in a fat continuous phase. Preferably, the droplets have a size, that is to say a diameter, of approximately 1-30 µm. The inventors have found that this size of water droplets in a continuous oil phase comprising at least 85% water have surprising advantages, that consist in: first reducing the microbial development, second improving the stability of the emulsion, and third mimicking the sensory properties of regular chocolates.

Preferably, the low-fat confectionery product according to the third embodiment of the present invention has less than 15% fat, and comprises at least 4% cocoa powder. The structure of the low-fat confectionery product according to the invention has a firm structure provided both by fat crystals that form a continuous network, and by the droplets structure that acts as a load to reinforce the fat phase.

A preferred emulsifying agent is SSL, in combination with another emulsifier, as it has been surprisingly discovered by the inventors that the use of this emulsifier allows mimicking the smoothness of regular chocolate.

The process for making the low-fat confectionery product according to the present embodiment of the invention comprises the following steps:
a) Mixing of the ingredients of the aqueous phase below 40°C
b) Heating of the aqueous phase at a temperature above 50°C, preferably at a temperature greater than 70°C,
c) Emulsification of the aqueous phase in the fat phase at a temperature above ambient, preferably at a temperature equal or greater than 50°C
d) Cooling the water-in-oil emulsion at a temperature above ambient
e) Adding particles in the oil phase of the water in oil emulsion.

The ingredients of the aqueous phase are water, structuring agents, sugars, preservatives, and aromas, for example. Preferred structuring agents are carrageenans.

Preferably, step b) is achieved at a temperature above 70°C to ensure the right hydration of the structuring agent whereas step c) is achieved at a temperature above the structuring point of the structuring agent.
It is recommended that the cooling of step d) is achieved at a temperature below the structuring temperature of the structuring agent.

In step e), particles are added. These particles can be cocoa powder, starch, milk powders, among others, or any combination thereof. Particles can be added as such or in suspension in a fat phase like for example cocoa liquor to incorporate cocoa powder. If the fat requires to be tempered, step e) can further comprise the addition of other fat tempering seeds or cocoa powder. For example, the fat tempering seeds can be Chocoseed® from Fuji oil, or cocoa butter or CBE seed crystals in the stable polymorph. Otherwise, fat (such cocoa butter contained in as cocoa liquor) can be tempered before its addition to the emulsion.

It is important for the purpose of the present embodiment that the aqueous phase is not gelled during droplet formation, but soon after in order to avoid a future destabilization of the emulsion. Furthermore, the aqueous phase droplets must be gelled before the addition of the particles otherwise the emulsion breaks.
The low-fat confectionery product of the present invention presents a fat mouthfeel, a melting sensation and a firmness that are far better than the ones of the known low-fat confectionery products comprising high amount of water, as explained in the examples.
This is due to the fact that the fmal product is still a combination of aqueous phase droplets and particles dispersed in the fat phase.
The following examples further illustrate some embodiments of the present invention, and should not be considered as limiting the scope of the invention.

### Example 1: co-suspension with cocoa and milk powders

| Composition | % w/w |
|---|---|
| Defatted cocoa powder | 10.7% |
| Skim milk powder | 32.0% |
| Water | 33.7% |
| Sucrose | 10.5% |
| Maltodextrin DE21 | 10.5% |
| Lactic acid | 1.2% |
| Potassium sorbate | 0.2% |
| β-lactoglobulin | 0.870% |
| Acacia gum | 0.430% |
| Sucralose | 0.030% |
| Vanillin | 0.030% |
| Total | 100.0% |

Two dispersions are made: 5% β-lactoglobulin in water, and 2.5% acacia gum in water. For both, pH is adjusted at 4.2 with HCl (around 1%).

For each solution, half of total sugars and vanillin are dissolved, and then half of the cocoa and milk powders are mixed in a conch-type of mixer like Brabender at 50°C for 30 min. Then the two suspensions are mixed together in the same type of mixer at 50°C for 30 min. The co-suspension is then ready to be used, for example to make a filling in a chocolate.

### Example 2: co-suspension with rice starch and cocoa powders

Exactly the same procedure is used but rice starch is used instead of milk powder.

### Example 3: co-suspension with fat

Exactly the same procedure is used as in example 1. At the end 10% cocoa butter is added to the co-suspension and mixed in the same mixer for an additional 15 min before the co-suspension can be used in confectionery products.

### Example 4: water in oil emulsion with cocoa powder

| Composition | % |
|---|---|
| Cocoa butter | 10.0% |
| Sucrose ester ER 190 | 2.0% |
| Cocoa powder 10-12 | 5.0% |
| Water | 41.7% |
| Carrageenan | 1.0% |
| Sugar | 40.0% |
| Sorbate potassium | 0.2% |
| Citric acid | 0.1 % |
| Vanillin | 0.025% |
| Total | 100.0% |

All aqueous ingredients (water, carrageenan, sugars, potassium sorbate, citric acid) are mixed together until a complete dissolution and dispersion of the components. Then the obtained aqueous phase is heated at 85°C for 15 minutes to ensure hydration of the carrageenan.
Separately fat phase is prepared at 65°C by mixing together fat, the emulsifier sucrose ester ER-190 and vanillin.
Emulsification is then done by mixing with a Bamix handmixer and adding the aqueous phase to the fat phase. When all aqueous phase has been added to the fat phase, the obtained emulsion is cooled down at 30°C and stored at this temperature for 30 minutes. At this temperature aqueous phase droplets are structured and rigid.
Cocoa powder can then be added without destruction of the emulsion. Moreover addition of cocoa powder at this temperature allows to temper the cocoa butter mass as crystal seeds of cocoa butter present in cocoa powder are sufficient to ensure crystallization of cocoa butter in the right crystalline form.
The obtained mass is then ready to be used as a component to make a confectionery product.

### Example 5: water-in-oil emulsion with cocoa liquor

| Composition | % |
|---|---|
| Cocoa butter | 9.0% |
| Sucrose ester ER 190 | 2.0% |
| Cocoa liquor | 5.0% |
| Water | 42.7% |
| Carrageenan | 1.0% |
| Sugar | 40.0% |
| Sorbate potassium | 0.2% |
| Citric acid | 0.1 % |
| Vanillin | 0.025% |
| Total | 100.0% |

Same procedure is used as in example 4. The exception is the addition of cocoa liquor in the last stage of the process instead of cocoa powder at 30°C. Cocoa liquor has been previously tempered on the marble to produce the right amount of cocoa butter crystal seeds according to the standard procedure followed by a professional in confectionery.

### Example 6: water-in-oil emulsion with cocoa liquor

| Composition | % |
|---|---|
| Cocoa butter | 9.0% |
| Sucrose ester ER 190 | 2.0% |
| Cocoa liquor | 9.0% |
| BOB seeds | 1.0% |
| Water | 39.7% |
| Carrageenan | 1.0% |
| Sugar | 38.0 % |
| Sorbate potassium | 0.2% |
| Citric acid | 0.1 % |
| Vanillin | 0.025% |
| Total | 100.0% |

Same procedure is used as in example 5. The exception is that cocoa liquor is not tempered beforehand but is added together with 1% BOB crystal seeds (*Chocoseed* Fuji Oil).

### Example 7: water-in-oil emulsion with SSL

Same emulsion is made as in example 4, but where 0.2% of water is replaced by an emulsifier, sodium stearoyl lactylate.
Obtained texture is even smoother and creamier than example 4.

## Claims

1. Low-fat confectionery product obtainable by process of claim 5 consisting of a water-in-oil emulsion comprising up 20% fat phase, 60-90% aqueous phase, cocoa particles, and at least a structuring agent.

2. Low fat confectionery product according to claim 1 wherein the structuring agent is taken from the group consisting of polysaccharides and proteins, or both.

3. Low fat confectionery product according to claim 1 or claim 2 wherein the product has a caloric content equal or less than 300 kcal/100 g.

4. Low fat confectionery product according to claim 1 wherein the product comprises sodium stearyl lactylate (SSL).

5. Process for manufacturing a low fat confectionery product according to one of claims 1 to 4 comprising the steps of:
a) Mixing of the ingredients of the aqueous phase below 40°C
b) Heating of the aqueous phase at a temperature above 50°C, preferably at a temperature greater than 70°C,
c) Emulsification of the aqueous phase in the fat phase at a temperature above ambient, preferably at a temperature equal or greater than 50°C
d) Cooling the water-in-oil emulsion at a temperature above ambient
e) Adding particles in the fat phase.

6. Low-fat confectionery product obtainable by process of claim 9 comprising 0-20% fat phase, 60-90% aqueous phase, electrically charged **cocoa** particles and at least a structuring agent, the low-fat confectionery product being a co-suspension
wherein the cocoa particles of the co-suspension are coated with the structuring agent.

7. Low fat confectionery product according to claim 6 comprising fat, and wherein fat particles are or are not electrically charged.

8. Process for manufacturing a low fat confectionery product according to one of claims 6 or 7 comprising the steps of
a) preparation of a water dispersion with a structuring agent like a globular protein or gelatin on one hand, and a water dispersion with a structuring agent like a polysaccharide on the other hand ;
b) dissolution of sugars or other soluble material in water and flavoring agents, when present, in each dispersion;
c) mixing of each dispersion independently together with the particles;
d) adjustment of the pH of the dispersion to a value where both the polysaccharide and the protein chosen carried opposite charges using an edible base or an acid;
e) mixing of the two suspensions. If one of the dispersions comprises fat, mixing is achieved at a temperature comprised between 30°C and 80°C, preferably between 40°C-60°C, most preferably at 50°C.

## Patentansprüche

1. Fettarmes Süßwarenprodukt, das durch das Verfahren gemäß Anspruch 5 erhältlich ist, bestehend aus einer Wasser-in-Öl-Emulsion mit einer Fettphase von bis zu 20%, einer wässrigen Phase von 60-90%, Kakaopartikeln und mindestens einem Aufbaumittel.

2. Fettarmes Süßwarenprodukt gemäß Anspruch 1, wobei das Aufbaumittel aus der Gruppe bestehend aus Polysacchariden und Proteinen oder beiden entnommen ist.

3. Fettarmes Süßwarenprodukt gemäß Anspruch 1 oder 2, wobei das Produkt einen Kaloriengehalt gleich oder weniger als 300 kcal/100 g aufweist.

4. Fettarmes Süßwarenprodukt gemäß Anspruch 1, wobei das Produkt Natriumstearoyllaktylat (SSL) enthält.

5. Verfahren zur Herstellung eines fettarmen Süßwarenproduktes gemäß einem der Ansprüche 1 bis 4 mit den folgenden Schritten:
a) Vermischen der Zutaten der wässrigen Phase unter 40°C
b) Erhitzen der wässrigen Phase bei einer Temperatur über 50°C, vorzugsweise bei einer Temperatur von mehr als 70°C
c) Emulgieren der wässrigen Phase in der Fettphase bei einer Temperatur über der Umgebungstemperatur, vorzugsweise einer Temperatur gleich oder höher als 50°C
d) Abkühlen der Wasser-in-Öl-Emulsion bei einer Temperatur über der Umgebungstemperatur
e) Zusetzen von Partikeln in der Fettphase.

6. Fettarmes Süßwarenprodukt, das durch das Verfahren gemäß Anspruch 9 erhältlich ist, mit einer Fettphase von 0 - 20%, einer wässrigen Phase von 60 - 90%, elektrisch aufgeladenen **Kakao**partikeln und mindestens einem Aufbaumittel, wobei das fettarme Süßwarenprodukt aus einer Mischsuspension besteht, wobei die Kakaopartikel der Mischsuspension mit dem Aufbaumittel überzogen sind.

7. Fettarmes Süßwarenprodukt gemäß Anspruch 6, das Fett enthält, und wobei Fettpartikel elektrisch aufgeladen oder nicht elektrisch aufgeladen sind.

8. Verfahren zur Herstellung eines fettarmen Süßwarenproduktes gemäß einem der Ansprüche 6 oder 7, mit den folgenden Schritten:
a) Zubereitung einerseits einer Wasserdispersion mit einem Aufbaumittel wie einem kugelförmigen Eiweiß oder kugelförmiger Gelatine und andererseits einer Wasserdispersion mit einem Aufbaumittel wie einem Polysaccharid;
b) Auflösung von Zuckerarten oder anderem löslichen Material in Wasser und Aromatisierungsmitteln, wenn vorhanden, in jeder Dispersion;
c) Vermischen der jeweiligen Dispersion unabhängig voneinander mit den Partikeln;
d) Einstellen des pH der Dispersion auf einen Wert, bei dem sowohl das ausgewählte Polysaccharid als auch das ausgewählte Eiweiß unter Verwendung einer essbaren Basis oder einer Säure entgegengesetzte Ladungen aufweisen;
e) Vermischen der zwei Suspensionen. Falls eine der Dispersionen Fett enthält, wird das Vermischen bei einer Temperatur zwischen 30°C und 80°C, vorzugsweise zwischen 40°C und 60°C, höchst bevorzugt bei 50°C erzielt.

## Revendications

1. Produit de confiserie à faible teneur en matière grasse susceptible d'être obtenu par le procédé de la revendication 5, consistant en une émulsion eau-dans-huile comprenant jusqu'à 20% de phase grasse, 60-90% de phase aqueuse, des particules de cacao et au moins un agent structurant.

2. Produit de confiserie à faible teneur en matière grasse selon la revendication 1, dans lequel l'agent structurant est choisi dans le groupe consistant en des polysaccharides et des protéines, ou les deux.

3. Produit de confiserie à faible teneur en matière grasse selon la revendication 1 ou la revendication 2, ledit produit ayant une teneur en calories égale ou inférieure à 300 kcal/100 g.

4. Produit de confiserie à faible teneur en matière grasse selon la revendication 1, le produit comprenant du stéaroyllactylate de sodium (SSL).

5. Procédé pour la fabrication d'un produit de confiserie à faible teneur en matière grasse selon l'une des revendications 1 à 4, comprenant les étapes consistant :
a) à mélanger les ingrédients de la phase aqueuse en-dessous de 40°C,
b) à chauffer la phase aqueuse à une température au-dessus de 50°C, de préférence à une température supérieure à 70°C,
c) à émulsionner la phase aqueuse dans la phase grasse à une température au-dessus de la température ambiante, de préférence à une température égale ou supérieure à 50°C,
d) à refroidir l'émulsion eau-dans-huile à une température au-dessus de la température ambiante,
e) à ajouter des particules dans la phase grasse.

6. Produit de confiserie à faible teneur en matière grasse susceptible d'être obtenu par le procédé de la revendication 9, comprenant 0-20% de phase grasse, 60-90% de phase aqueuse, des particules de cacao chargées électriquement et au moins un agent structurant, le produit de confiserie à faible teneur en matière grasse étant une co-suspension,
dans lequel les particules de cacao de la co-suspension sont enrobées avec l'agent structurant.

7. Produit de confiserie à faible teneur en matière grasse selon la revendication 6, comprenant de la matière grasse, et dans lequel des particules de matière grasse sont ou ne sont pas chargées électriquement.

8. Procédé pour la fabrication d'un produit de confiserie à faible teneur en matière grasse selon l'une des revendications 6 ou 7, comprenant les étapes consistant :
a) à préparer d'une part une dispersion aqueuse avec un agent structurant tel qu'une protéine globulaire ou de la gélatine, et d'autre part une dispersion aqueuse avec un agent structurant tel qu'un polysaccharide ;
b) à dissoudre des sucres ou une autre matière soluble dans de l'eau et des agents aromatisants, lorsqu'ils sont présents, dans chaque dispersion ;
c) à mélanger chaque dispersion indépendamment conjointement avec les particules ;
d) à ajuster le pH de la dispersion à une valeur à laquelle à la fois le polysaccharide et la protéine choisis présentant des charges opposées en utilisant une base ou un acide comestible ;
e) à mélanger les deux suspensions . Si l'une des dispersions comprend de la matière grasse, le mélange est effectué à une température comprise entre 30°C et 80°C, de préférence entre 40°C - 60°C, le plus préférablement à 50°C.
